**Europäisches Patentamt**

**European Patent Office**

**Office européen des brevets**

(19)

(11) Numéro de publication : **0 467 732 A1**

## (12) DEMANDE DE BREVET EUROPEEN

(21) Numéro de dépôt : **91401708.2**

(22) Date de dépôt : **25.06.91**

(51) Int. Cl.$^5$ : **C25B 3/10,** C08G 61/10,
// H01L29/28, G02B5/20

(30) Priorité : **27.06.90 FR 9008091**

(43) Date de publication de la demande :
**22.01.92 Bulletin 92/04**

(84) Etats contractants désignés :
**DE GB**

(71) Demandeur : **FRANCE TELECOM**
**6 place d'Alleray**
**F-75015 Paris (FR)**

(72) Inventeur : **Froyer, Gérard**
**Rue du Rusquet, Brelevenez**
**F-22300 Lannion (FR)**

Inventeur : **Pelous, Yvan**
**22 Résidence Duroux**
**F-22300 Lannion (FR)**
Inventeur : **Dall'Arche, Emmanuelle**
**66 rue Lt-Colonel de Montbrison**
**F-92500 Rueil Malmaison (FR)**
Inventeur : **Chevrot, Claude**
**43 rue Schnapper**
**F-78100 St Germain en Laye (FR)**
Inventeur : **Siove, Alain**
**16 rue Jean Mermoz**
**F-95320 Soisy Sous Montmorency (FR)**

(74) Mandataire : **Ahner, Francis et al**
**CABINET REGIMBEAU, 26, avenue Kléber**
**F-75116 Paris (FR)**

(54) **Procédé de synthèse d'oligomères sublimables à base de phénylène, linéaires et de longueur contrôlée.**

(57)    la présente invention se rapporte à un procédé de préparation d'oligomères sublimables à base de phénylène, linéaires et de longueur contrôlée, par couplage électrochimique de deux oligomères inférieurs au sein d'une cellule monocompartimentée à trois électrodes, en présence d'un catalyseur organométallique, caractérisé en ce qu'il comprend :

1- l'électrolyse du catalyseur et sa réaction avec l'un des deux oligomères à un premier potentiel,

2- la réduction de l'espèce d'insertion obtenue selon l'étape 1, et sa réaction avec le second oligomère à un second potentiel inférieur au premier potentiel, et

3- la récupération de l'oligomère sublimable ainsi obtenu, les deux oligomères inférieurs utilisés étant des oligomères mono- ou dihalogénés, identiques ou différents.

la présente invention concerne également les oligomères sublimables à base de phénylène obtenus selon ce procédé, et leurs applications en électronique et/ou optique.

EP 0 467 732 A1

La présente invention se rapporte à un procédé de préparation d'oligomères sublimables à base de phénylène, linéaires et de longueur contrôlée.

Des polymères électroactifs, comme le polyparaphénylène, présentent des propriétés semi-conductrices et optiques remarquables, et constituent par conséquent, pour l'industrie électronique par exemple, un matériau de choix.

Toutefois, leur mise en oeuvre selon les méthodes classiques posent de réels problèmes.

Ils sont en général insolubles et infusibles, et par conséquent ne se prêtent pas à des dépôts effectués sous vide selon les techniques qui sont habituellement utilisées en industrie électronique pour la réalisation de semi-conducteurs en couche mince, d'isolants et la métallisation par exemple.

L'objet de la présente invention est précisément de proposer un procédé de préparation d'oligomères à base de phénylène, qui soient sublimables.

La littérature rend déjà compte de différentes méthodes de préparation d'oligomères à base de phénylène. Toutefois, aucune d'entre elles n'est totalement satisfaisante.

Dans la majorité des cas, ces méthodes ne conduisent qu'aux homo-oligomères pairs, qui sont en outre souvent mélangés avec des sels métalliques et d'autres composés. De tels mélanges sont bien entendu difficilement exploitables, et nécessitent la mise en oeuvre d'étapes complémentaires de purification qui diminuent considérablement le rendement global de la réaction.

Quant aux rares méthodes conduisant aux oligomères impairs, elles mettent en oeuvre une série de réactions fastidieuses qui affectent également le rendement.

On peut citer plus particulièrement deux méthodes faisant appel à la voie électrochimique pour la préparation de tels oligomères ou polymères. Ces méthodes sont basées sur la dimérisation d'un oligomère monohalogéné en présence d'un complexe métallique (J. PERICHON, Journal of Organometallic Chemistry, 303, (1986), p. 131) ou la polymérisation d'oligomères dihalogénés également en présence d'un complexe métallique (J.F. FAUVARQUE, Makromol. Chim., 186, (1985), p. 1415). Selon ces méthodes, l'ensemble des réactifs est introduit dès le début de la réaction et la polymérisation ou dimérisation réalisée en un seul temps à un potentiel de réaction unique. Il est évident que dans de telles conditions il est très difficile de moduler la réaction.

La présente invention se rapporte à un procédé de préparation d'oligomères sublimables à base de phénylène, linéaires et de longueur contrôlée, par couplage électrochimique de deux oligomères inférieurs, au sein d'une cellule mono-compartimentée à trois électrodes et en présence d'un catalyseur organométallique caractérisé en ce qu'il comprend :

1 - l'électrolyse du catalyseur et sa réaction avec l'un des deux oligomères à un premier potentiel,

2- la réduction de l'espèce d'insertion obtenue selon l'étape 1, et sa réaction avec le second oligomère à un second potentiel inférieur au premier potentiel, et

3- la récupération de l'oligomère sublimable ainsi obtenu, les deux oligomères inférieurs utilisés étant des oligomères mono- ou dihalogénés, identiques ou différents.

Le procédé selon la présente invention présente des avantages par rapport aux méthodes déjà connues, grâce au déroulement en deux temps du couplage électrochimique. Il permet le couplage de deux oligomères à base de phénylène, mono- ou dihalogénés, identiques ou différents, mais également le couplage d'un oligomère à base de phénylène monohalogéné avec un oligomère hétérocycle mono- ou dihalogéné.

C'est la connaissance précise du mécanisme catalytique qui permet de bien séparer ces deux temps, et de jouer sur le paramètre potentiel pour moduler la réaction de couplage.

Dans un premier temps on réalise l'électrolyse du catalyseur qui s'insère dans la liaison chimique carbonehalogène du premier oligomère monohalogéné. Ceci conduit à une espèce d'insertion stable dans le milieu au potentiel de travail utilisé. Dans un second temps, on effectue la réduction de cette espèce d'insertion que l'on fait réagir avec le second oligomère. Ce second oligomère n'est additionné dans le milieu qu'à la fin de l'électrolyse du catalyseur. Ce deuxième temps, à savoir la réduction de l'espèce d'insertion et sa réaction avec ce second oligomère est réalisé en outre à un potentiel inférieur au premier potentiel.

En ce qui concerne le catalyseur, il est choisi de façon à être réduit à un potentiel moins cathodique que l'oligomère halogéné d'ordre inférieur, que l'on introduit en sa présence dans le milieu en début de réaction. Ce catalyseur est un sel d'halogénure de métal de transition, représenté par la formule générale 1 :

$$MX_2L \qquad I$$

dans laquelle M représente Ni, Cu, Co ou Sn, X un halogène, en particulier le brome, et L un ligand de type bipyridine, triphénylphosphine, 1-10 phénanthroline, bisquinoléine, ou 1,2 bis diphénylphosphinoéthane.

De préférence, il s'agit d'un sel d'halogénure d'un complexe du nickel, et de préférence du bis-triphénylphosphine de nickel.

Selon la présente invention, il est possible de mettre en oeuvre une grande diversité d'oligomères. Ces deux oligomères peuvent être choisis indépendamment l'un de l'autre, parmi les oligomères de phénylène, pairs ou impairs et mono- ou dihalogénés, et des oligomères hétérocycliques mono- ou dihalogénés.

EP 0 467 732 A1

Les oligomères hétérocycliques mono- ou dihalogénés sont de préférence représentés par la formule générale II :

$$XR(X)n \qquad II$$

dans laquelle n représente 1 ou 0, X un halogène et R un groupe choisi parmi les groupements carbazole N substitué, fluorène, bithiophène, pyridine, bipyridine, dibenzofuranne et dibenzothiophène.

Le procédé selon l'invention permet d'obtenir des paraoligophénylènes pairs ou impairs à partir de l' homocouplage de deux oligomères monohalogénés identiques, l' homocouplage croisé de deux oligomères monohalogénés différents, l'un pair et l'autre impair par exemple, ou encore le couplage d'un oligomère monohalogéné avec un oligomère dihalogéné.

De même, il est possible de préparer certains oligomères à base de phénylène par hétérocouplage d'un oligomère à base de phénylène dihalogéné avec un oligomère hétérocyclique monohalogéné réductible de formule $XR(X)_n$.

Enfin, on peut également obtenir certains oligomères à base de composés hétérocycliques par hétérocouplage entre un oligomère de phénylène monohalogéné et un oligomère hétérocyclique dihalogéné.

Bien entendu, l'ensemble des oligomères obtenus selon le procédé de la présente invention sont sublimables.

La méthode de couplage mise en oeuvre selon la présente invention consiste à utiliser une cellule électrochimique monocompartimentée à trois électrodes, une cathode, une anode et une électrode de référence, et remplie d'un électrolyte constitué d'un solvant organique ou mélange de solvant résistant à la réduction.

A titre de solvant on peut utiliser le DMA ou encore un mélange de deux tiers de tétrahydrofurane (THF), et d'un tiers d'hexaméthylphosphorotriamide (HMPT), l'acétonitrile et les solvants de substitution du HMPT, comme la N,N-diméthyléthylène urée (DMEU).

De préférence on ajoute également à l'électrolyte un sel de fond anhydre d'une conductivité ionique, et ne fournissant pas de protons.

Il peut s'agir d'un sel choisi dans le groupe $LiBF_4$, $LiCLO_4$, $NR_4BF_4$, avec R représentant un groupe alkyle inférieur, et de préférence un groupe butyle.

La cathode est liquide et de préférence à base de mercure ou d'un alliage métallique liquide. L'anode ou contre-électrode qui est soluble est par exemple en magnésium ou en lithium. Quant à l'électrode de référence, elle est le plus fréquemment en argent/perchlorate d'argent ou au caloniel saturé.

Ainsi, selon un mode de mise en oeuvre préférentiel du procédé, on introduit dans la cellule électrochimique le catalyseur et le premier oligomère inférieur. Le potentiel d'électrolyse est fixé de manière à permettre la réduction du catalyseur.

A ce potentiel, le métal zéro-valent réduit s'insère dans la liaison carbone-halogène, et l'on peut suivre l'évolution de la réduction du sel métal en métal 0 et de ce fait l'insertion par la variation du courant qui traverse la cellule en fonction du temps.

On ajoute ensuite le second oligomère et on effectue le couplage en amenant le potentiel à une valeur plus cathodique qui est fonction des composés introduits et de la nature du catalyseur, ce deuxième potentiel étant inférieur au premier potentiel.

En fin de réaction, il suffit d'effectuer une simple filtration et des lavages avec les solvants des oligomères introduits pour isoler le produit de la réaction. L'oligomère ainsi obtenu et séché sous vide est suffisamment pur et bien linéaire pour être directement sublimé sans purification supplémentaire.

Comme mentionné précédemment, ce matériau est tout particulièrement utile dans l'industrie électronique et/ou optique. Il peut être déposé par sublimation de manière à obtenir des couches de matériau sublimées, pouvant atteindre jusqu'à plusieurs milliers d'angstroms d'épaisseur.

Ces couches de matériau sont homogènes et peuvent recevoir à leur tour, sans remise à l'air, d'autres dépôts sous vide ou subir des traitements annexes.

La présente invention concerne également les oligomères à base de phénylène linéaire et sublimable obtenues par le procédé selon l'invention.

Elle se rapporte en outre aux applications de ces oligomères dans l'industrie électronique et/ou optique. En électronique, par exemple: planarisation, isolation (comme traitement passif) et convenablement dopé, utilisation comme semi-conducteur de transistor à effet de champ en couche mince; en optique, par exemple: traitement passif anti ultra-violet ou comme matériau actif dans la génération de troisième harmonique.

D'autres avantages et caractéristiques de la présente invention apparaîtront à la lecture des exemples donnés ci-après à titre non limitatif.

## EXEMPLE 1

Dans une cellule électrochimique à compartiment unique et trois électrodes contenant un mélange de 70

3

ml THF (tétrahydrofuranne) et 30 ml HMPT (hexaméthylphosphotriamide), on introduit entre $10^{-3}$ et $5\ 10^{-3}$ mole de $Ph_3Br$, autant de $NiBr_2(PPh_3)_2$, un excès de ligand $PPh_3$ (soit $10^{-2}$ mole) et un sel de fond ($LiBF_4$).

On se place à un potentiel $E_1 = -1,2$ V/ECS de façon à réduire le $Ni^{2+}$ en $Ni^0$ et à former l'espèce d'insertion $Ph_3NiBr$. Lorsque la réaction se termine, le courant d'électrolyse chute et on additionne alors la même quantité de $Ph_2Br$ entre ($10^{-3}$ et $5\ 10^{-3}$ mole). Le potentiel est fixé à $E_2 = -1,4$ V/ECS. Le couplage s'opère alors et conduit à la précipitation de l'oligomère $Ph_5$. L'oligomère est filtré, lavé plusieurs fois à l'eau acidulée $H_2SO_4$ 5 %, puis à l'alcool et l'acétone, il est enfin séché sous vide.

## EXEMPLE 2 :

Dans les mêmes conditions que pour $Ph_5$, mais en additionnant $Ph_3Br$ dans la seconde étape et en se plaçant à $E_2 = -1,4$ V/ECS, on obtient l'oligomère $Ph_6$ qui est isolé et traîté comme précédemment.

## EXEMPLE 3

Avec la même cellule électrochimique contenant 100 ml de DMA (diméthylacétamide) et un sel de fond $NBu_4BF_4$, $Ph_3Br$ et le catalyseur $NiBr_2(PPh_3)_2$, son ligand $PPh_3$ en excès dans les mêmes proportions que l'exemple 1, on obtient en se plaçant à $E_1 = -1,2$ V/ECS l'espèce d'insertion $Ph_3NiBr$. On ajoute ensuite au milieu une quantité équivalente de 3 bromo N-éthyl-carbazole (de $10^{-3}$ à $5\ 10^{-3}$ mole) et le potentiel est fixé à $E_2 = -1,4$ à -1,5 V/ECS.

On observe un précipité qui correspond à une fraction de l'oligomère de couplage terphényl-N-éthyl-carbazole qui est filtré et traité comme précédemment. Une autre fraction peut être isolée de la solution par précipitation dans un large volume d'eau acidulée $H_2SO_4$ 5 %, filtration de l'oligomère et traitements habituels.

## EXEMPLE 4

Dans les mêmes conditions que dans l'exemple précédent avec le même catalyseur, mais en utilisant le dppe (diphénylphosphino-éthane) comme ligand excédentaire, on obtient l'espèce d'insertion $Ph_3NiBr$ à $E_1 = -1,2$ V/ECS.

On additionne ensuite du dibromo N éthyl carbazole dans le milieu en quantité moitié par rapport au $Ph_3Br$ de départ. On se place à $E_2 = -1,4$ à -1,5 V/ECS et on observe la précipitation de l'oligomère terphényl-N-éthyl-carbazole-terphényle qui est isolé et traité comme indiqué ci dessus.

## Revendications

1. Procédé de préparation d'oligomères sublimables à base de phénylène, linéaires et de longueur contrôlée, par couplage électrochimique de deux oligomères inférieurs, au sein d'une cellule monocompartimentée à trois électrodes, en présence d'un catalyseur organométallique caractérisé en ce qu'il comprend:
   1- l'électrolyse du catalyseur et sa réaction avec l'un des deux oligomères à un premier potentiel,
   2- la réduction de l'espèce d'insertion obtenue selon l'étape 1, et sa réaction avec le second oligomère à un second potentiel inférieur au premier potentiel, et
   3- la récupération de l'oligomère sublimable ainsi obtenu, les deux oligomères inférieurs utilisés étant des oligomères mono- ou dihalogénés, identiques ou différents.

2. Procédé selon la revendication 1, caractérisé en ce que le catalyseur organométallique est choisi de façon à être réduit à un potentiel moins cathodique que l'oligomère en présence duquel il est électrolysé.

3. Procédé selon la revendication 1 ou 2, caractérisé en ce que le catalyseur est un sel d'halogénure de métal de transition représenté par la formule générale I:

$$MX_2L \qquad I$$

dans laquelle M représente Ni, Cu, Co ou Sn, X représente un halogène, en particulier le brome, et L représente un ligand choisi de préférence parmi les groupements bipyridine, triphénylphosphine, 1-10-phénanthroline, bisquinoléine et 1,2 bis diphénylphosphinoéthane.

4. Procédé selon l'une des revendications 1 à 3, caractérisé en ce que le catalyseur est un sel d'halogénure d'un complexe du nickel et de préférence du bis-triphénylphosphine de nickel.

5. Procédé selon l'une des revendications 1 à 4, caractérisé en ce que les deux oligomères inférieurs représentent, indépendamment l'un de l'autre, un oligomère à base de phénylène pair ou impair mono- ou dihalogéné ou un oligomère hétérocyclique mono- ou dihalogéné.

6. Procédé selon la revendication 5, caractérisé en ce que l'oligomère hétérocyclique répond à la formule générale II:

$$X\text{-}R\text{-}(X)n \qquad II$$

dans laquelle X représente un atome d'halogène, n représente 0 ou L, et R un groupement carbazole N substitué, bithiophène, pyridine, bipyridine, dibenzofuranne ou dibenzothiophène.

7. Procédé selon l'une des revendications 1 à 6, caractérisé en ce que l'oligomère sublimable est isolé par simple filtration à la fin de la réaction.

8. Oligomères sublimables à base de phénylène, obtenus selon le procédé de l'une des revendications 1 à 7.

9. Applications de l'oligomère selon la revendication 8 en électronique et/ou optique.

Office européen
des brevets

# RAPPORT DE RECHERCHE EUROPEENNE

Numero de la demande

EP 91 40 1708

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CHEMICAL ABSTRACTS, vol. 112, no. 14, 2 avril 1990, page 609, abrégé no. 127714x, Columbus, Ohio, US; A. ABOULKASSIM et al.: "Electrosynthesis of all-electroactive copolymers based on phenylene and carbazolylene units", & SYNTH. MET. 1989, 33(1), 57-64 --- | 1 | C 25 B 3/10<br>C 08 G 61/10 //<br>H 01 L 29/28<br>G 02 B 5/20 |
| A | CHEMICAL ABSTRACTS, vol. 109, no. 18, 31 octobre 1988, page 609, abrégé no. 158525d, Columbus, Ohio, US; C. AMATORE et al.: "Rates and mechanism of biphenyl synthesis catalyzed by electrogenerated coordinatively unsaturated nickel complexes", & ORGANOMETALLICS 1988, 7(10), 2203-14 --- | 1 | |
| A | JOURNAL OF CHEMICAL SOCIETY, DALTON TRANSACTIONS, vol. 5, 1981, pages 1074-1081; G. SCHIAVON et al.: "Coupling of organic halides eletrocatalyzed by the Ni''/Ni'/NiO-PPh3 system. A mechanistic study based on an electroanalytical approach" * Page 1080, conclusions * ----- | 1 | |

DOMAINES TECHNIQUES RECHERCHES (Int. Cl.5)

C 25 B 3

Le présent rapport a été établi pour toutes les revendications

| Lieu de la recherche | Date d'achèvement de la recherche | Examinateur |
|---|---|---|
| LA HAYE | 23-10-1991 | GROSEILLER PH.A. |

EPO FORM 1503 03.82 (P0402)